# EUROPEAN PATENT APPLICATION

(11) **EP 2 216 257 A1**
(43) Date of publication of application: **11.08.2010**
(21) Application number: 08850307.3
(22) Date of filing: 11.11.2008
(51) Int. Cl.: B65D 23/00, B32B 1/02, B32B 27/32, B65D 1/40

(54) **COMPOUND CONTAINER**

(30) Priority: 13.11.2007 JP 2007294891
(71) Applicant: Du Pont-Mitsui Polychemicals Co., Ltd., Tokyo 105-7117 (JP)
(72) Inventor: YAMAMOTO, Sadaki, Ichihara-shi Chiba 299-0108 (JP); OOGI, Kazuyuki, Ichihara-shi Chiba 299-0108 (JP); SATO, Masanobu, Ichihara-shi Chiba 299-0108 (JP)
(74) Representative: Gulde Hengelhaupt Ziebig & Schneider
(86) International application number: PCT/JP2008/070504
(87) International publication number: WO 2009/063865

(57) **Abstract**

[Problem] It is an object to provide a composite container in which a shape and a profile of a resin hollow molding body can be discriminated with clarity in the case in which a visual contact is carried out to the inside resin hollow molding body via an outside transparent resin sheathing body, whereby a design property can be displayed to a satisfactory extent, and in which a design property can be displayed to a satisfactory extent even by a combination of the resin hollow molding body and the outside transparent resin sheathing body.

[Means for Resolution] A composite container comprises a hollow molding body (a) made of a resin having a hollow inside and a highly transparent resin sheathing body (b) that has been integrated with an outside of the hollow molding body (a), wherein as a thickness of the highly transparent resin sheathing body (b) for a cross section in a horizontal direction getting across the hollow molding body (a) and the highly transparent resin sheathing body (b) at the major portion of the composite container, a minimum thickness (X) of the highly transparent resin sheathing body (b) is at least 0.1 mm and a difference of a maximum thickness (Y) and the minimum thickness (X) is at least 2 mm.

## Description

### TECHNICAL FIELD

The present invention relates to a composite container for holding a powdered material or a liquid material having a flow property such as a cosmetic solution, a chemical, and a beverage. More specifically, the present invention relates to a composite container of which an outside layer is made of a resin.

### BACKGROUND ART

As a container for holding a liquid material such as a cosmetic solution, a chemical, and a beverage, a container with a cap having an excellent corrosion resistance and a satisfactory airtight property has been widely used. The container is made of a glass in general. In some cases however, a container made of a synthetic resin can also be used to obtain similar effects.

The glass container has a dignity sense and a high quality sense, and is transparent whereby a condition inside the container is visible with the naked eye. Consequently, the glass container can be preferably used as a container of a cosmetic solution in particular. However in some cases, the glass container may be easily damaged by a shock during a carrying operation or by a drop in use. In many cases, the glass container has a simple shape, thereby being lack in a poor decorative property disadvantageously.

On the other hand, a container made of a synthetic resin is lack in a dignity sense and it is hard to project a high quality sense.

Although a container made of a metal is also known, the metal container is opaque whereby a condition inside the container is invisible with the naked eye. Consequently, a use application of the metal container is restricted.

Therefore, Patent document 1 proposes a composite container in which a resin is over-molded on the outside surface of a container made of a glass and at least one of the inside and the outside of the container is formed by a transparent body in order to improve a design property.
Patent document 1: Japanese Unexamined Patent Application Publication No. 2004-527424

### DISCLOSURE OF THE INVENTION

### PROBLEMS TO BE SOLVED BY THE INVENTION

Even for a container in which a hollow body inside is made of a glass among such conventional composite containers, a damage caused by a drop cannot be prevented in many cases. In the case in which a visual contact is carried out to an inside hollow body made of a glass via a resin sheathing body made of an outside molded transparent body, a shape and a profile of the inside hollow body made of a glass cannot be discriminated to a satisfying extent, and a design property cannot be displayed to a satisfying extent.

For a conventional composite container, an inside hollow body is visible via a transparent resin sheathing body, and the inside hollow body and the outside resin sheathing body are in different shapes. Consequently, the conventional composite container has a design property caused by a combination of the two shapes. However, since the inside hollow body cannot be discriminated to a satisfying extent, the design property caused by the combination cannot be displayed to a satisfying extent.

The present invention was made in consideration of such conditions, and an object of the present invention is to provide a composite container in which a shape and a profile of a resin hollow molding body can be discriminated with clarity in the case in which a visual contact is carried out to the inside resin hollow molding body via an outside transparent resin sheathing body, whereby a design property due to the resin hollow molding body can be displayed to a satisfying extent, and a design property caused by a combination of the resin hollow molding body and the outside transparent resin sheathing body can be displayed to a satisfying extent.

### MEANS FOR SOLVING THE PROBLEMS

The present invention was made in order to solve the above problems of the conventional art. A composite container in accordance with the present invention is characterized by comprising a hollow molding body (a) made of a resin having a hollow inside (hereafter simply referred to as a resin hollow molding body (a) in some cases) and a highly transparent resin sheathing body (b) that has been integrated with an outside of the resin hollow molding body (a) (hereafter simply referred to as a resin sheathing body (b) in some cases), wherein as a thickness of the highly transparent resin sheathing body (b) for a cross section in a horizontal direction getting across the hollow molding body (a) and the highly transparent resin sheathing body (b) at the major portion of the composite container, a minimum thickness (X) of the highly transparent resin sheathing body (b) is at least 0.1 mm and a difference of a maximum thickness (Y) and the minimum thickness (X) is at least 2 mm.

By using a highly transparent synthetic resin for the resin sheathing body in the composite container having the above described configuration, a shape and a profile of the resin hollow molding body (a) is clearly visible via the resin sheathing body (b) and a high quality sense can be projected. In addition, in the case in which a visual contact is carried out to the total shape and profile even if they are not clear, an aesthetic appreciation and an appearance property can be improved.

For the composite container in accordance with the present invention, it is preferable that a shape of the resin hollow molding body (a) and that of the highly transparent resin sheathing body (b) are different from each other.

By the above described configuration, in the case in which a visual contact is carried out to the inside from a thin wall part of the highly transparent resin sheathing body (b), a contrast can be improved as a whole, whereby the resin hollow molding body (a) can be discriminated with clarity from the outside.

For the composite container in accordance with the present invention, it is preferable that the highly transparent resin sheathing body (b) is made of a highly transparent synthetic resin having a total ray transmittance (conforming to JIS K7105, and measured with a sheet having a thickness of 1 mm) of at least 80%.

By using a highly transparent synthetic resin as the highly transparent resin sheathing body (b) in the composite container having the above described configuration, a high quality sense can be further projected due to a synergistic effect of the highly transparent resin sheathing body (b) and the resin hollow molding body (a) . In addition, an aesthetic appreciation and an appearance property can be further improved.

For the composite container in accordance with the present invention, it is preferable that the highly transparent synthetic resin is an ionomer of an ethylene (meth)acrylate copolymer (ethylene (meta) acrylate copolymer).

By using a highly transparent synthetic resin in the composite container having the above described configuration, a satisfactory thick-walled molding can be carried out. In addition, a dignity sense of a glass can be obtained, thereby bringing about a high quality sense. Moreover, the composite container can be formed at low costs.

### EFFECT OF THE INVENTION

For the present invention, by making a thickness of a highly transparent resin sheathing body (b) that has been integrated with a resin hollow molding body (a) to be a prescribed thickness, a shape and a profile of the resin hollow molding body (a) can be discriminated with clarity in the case in which a visual contact is carried out to the inside resin hollow molding body via the outside transparent resin sheathing body, whereby a design property can be improved. Moreover, a complicated shape can be adopted since a core part is made of a resin, a satisfactory decorating property can be displayed. Furthermore, a design property can be displayed to a satisfying extent even by a combination of the two shapes, and the composite container is hardly damaged.

### BRIEF DESCRIPTION OF THE DRAWINGS

Fig. 1 is a perspective view showing a composite container in accordance with an embodiment of the present invention.
Fig. 2(A) is a cross-sectional view in a longitudinal direction for the composite container shown in Fig. 1, and Fig. 2(B) is a cross-sectional view in a direction along the line C-C of Fig. 2 (A) .
Fig. 3 is an elevation view showing a composite container in accordance with another embodiment of the present invention.
Fig. 4 is a cross-sectional view in a horizontal direction for the composite container shown in Fig. 3.
Fig. 5 is a cross-sectional view in a horizontal direction for a composite container in accordance with another embodiment of the present invention.
Fig. 6 is a cross-sectional view in a horizontal direction for a composite container in accordance with another embodiment of the present invention.
Fig. 7 is a cross-sectional view in a horizontal direction for a composite container in accordance with another embodiment of the present invention.
Fig. 8 is a cross-sectional view in a horizontal direction for a composite container in accordance with another embodiment of the present invention.

### EXPLANATIONS OF LETTERS OR NUMERALS

A, B, C, D, E, and F: Composite containers
a: Hollow molding body made of a resin (resin hollow molding body)
b: Highly transparent resin sheathing body (resin sheathing body)
14: Opening portion
18: Cap member

### BEST MODE OF CARRYING OUT THE INVENTION

An embodiment (example) of the present invention will be described below in detail with reference to the drawings.

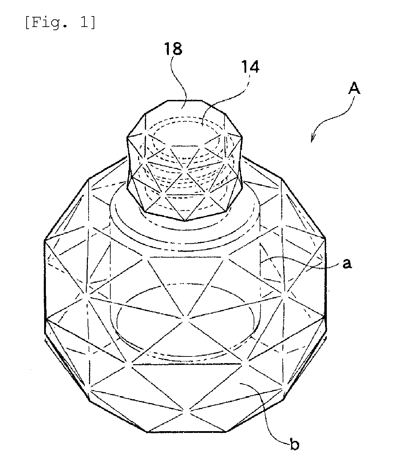

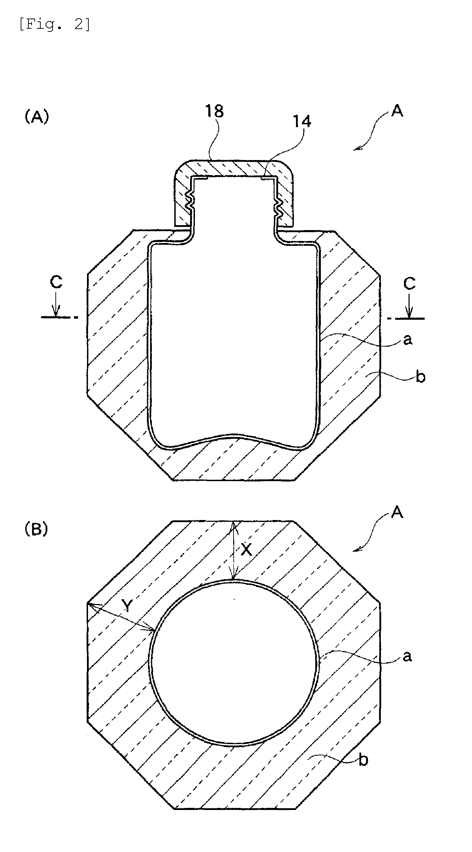

Fig. 1 is a perspective view showing a composite container in accordance with an embodiment of the present invention. Fig. 2(A) is a cross-sectional view in a longitudinal direction for the composite container shown in Fig. 1, and Fig. 2(B) is a cross-sectional view in a direction along the line C-C of Fig. 2(A).

A composite container (A) is used for holding a liquid material having a flow property such as a cosmetic solution, a chemical, and a beverage.

As shown in Fig. 1, the composite container (A) is composed of a hollow molding body (inner bottle) (a) made of a resin provided with an opening portion 14 that is an inlet or an outlet for a content and a highly transparent resin sheathing body (b) formed in such a manner that an outside of the resin hollow molding body (a) is covered in an integrating manner with the highly transparent resin sheathing body. More specifically, the composite container A in accordance with the present invention is formed by over-molding the highly transparent resin sheathing body (b) on the outer circumferential side of the hollow molding body (a) made of a resin. The hollow molding body (inner bottle) (a) made of a resin provided with the opening portion 14 can hold a powdered material or a liquid material having a flow property such as a cosmetic solution, a chemical, and a beverage.

In the present embodiment, while the resin hollow molding body (a) is formed inside in a generally cylindrical shape, the highly transparent resin sheathing body (b) is formed outside in a spherical shape formed in such a manner that triangles are combined in a multifaceted fashion. In other words, a shape of the inside hollow molding body (a) and that of the highly transparent resin sheathing body (b) are different from each other, and the inside hollow molding body (a) and the highly transparent resin sheathing body (b) are combined.

A cap member 18 is attached to the opening portion 14 of the resin hollow molding body (a) to seal the opening portion 14, thereby preventing a liquid material or a powdered material from coming into contact with an ambient air or from scattering externally out of the opening portion 14 and preventing a grit and dust from entering the opening portion 14. In this embodiment, the opening portion 14 and the cap member 18 are screwed and jointed to each other. However, the present invention is not restricted to such a configuration. For instance, the cap member 18 can also be fitted into the opening portion 14 in an inserting manner.

Moreover, as a liquid material that is held in the composite container (A), there can be mentioned for instance a powdered material and a liquid material having a flow property such as a cosmetic solution, a chemical, and a beverage. In the present invention, the liquid material includes a pasty material.

As shown in Fig. 2(A), for such a composite container (A) that holds the above contents, the resin sheathing body (b) covers the entire of the lower side of the opening portion 14 of the hollow molding body (a) made of a resin.

As shown in Fig. 2(B), as a thickness of the highly transparent resin sheathing body (b) for the composite container (A) in accordance with the present invention, for a cross section in a direction along the C-C line getting across the resin hollow molding body (a) and the highly transparent resin sheathing body (b) at the major portion of the composite container (A), it is preferable that a minimum thickness (X) of the highly transparent resin sheathing body (b) is at least 0.1 mm and a difference of a maximum thickness (Y) and the minimum thickness (X) of the highly transparent resin sheathing body (b) is at least 2 mm.

Here, the "major portion" of the composite container (A) represents the main body of the composite container (A) (an area in which the dimensions and a shape of the highly transparent resin sheathing body (b) are kept almost constant in a cross section in a horizontal direction for the composite container (A)) like a center part of the container in a vertical direction of the composite container (A) in a cylindrical shape or in a prismatic shape for instance, and an area other than sections around the opening portion 14 and the bottom face of the composite container (A). More specifically, the "major portion" of the composite container (A) represents an area as shown in Fig. 2 (B) for a cross section in a direction along the C-C line shown in Fig. 2(A).

In the case in which a resin thickness of the highly transparent resin sheathing body (b) is specified at the major portion of the composite container (A) as described above, a contrast appears with clarity due to a difference of a resin thin part and a resin thick part in the case in which a visual contact is carried out to the inside. Moreover, it is preferable that a thickness increases by slow degrees from the minimum thickness (X) to the maximum thickness (Y).

For such a composite container (A), it is preferable to use a highly transparent synthetic resin as a material of the highly transparent resin sheathing body (b). It is more preferable to use a synthetic resin having a total ray transmittance (conforming to JIS K7105, and measured with a sheet having a thickness of 1 mm) in the range of 80% to 100%, more preferably in the range of 85% to 100%.

As a material of a highly transparent synthetic resin that satisfies the above range of a transmittance, an ionomer resin, an acrylic resin, a polyester resin, and styrene resins (such as a styrene acrylonitrile copolymer resin and a styrene methylmethacrylate copolymer resin) can be used. Preferably, an ionomer resin and a polyester resin can be used. More preferably, an ionomer resin can be used.

As an ionomer resin, a carboxyl group of an ethylene unsaturated carboxylic acid copolymer containing unsaturated carboxylic acid of 1 to 40 weight% can be used for instance. At least part (generally more than 0 mol% and up to 100 mol%, preferably up to 90 mol%) of the carboxyl group is neutralized by metal ions.

An ethylene unsaturated carboxylic acid copolymer that is a base polymer of an ionomer resin can be obtained by copolymerizing ethylene, unsaturated carboxylic acid, and any other polar monomers. As unsaturated carboxylic acid, acrylic acid, methacrylic acid, fumaric acid, maleic acid, anhydrous maleic acid, monomethyl maleate, and monoethyl maleate can be mentioned. In particular, methacrylic acid is preferable.

As a polar monomer that can be a copolymer component, vinyl ester such as vinyl acetate and vinyl propionate, unsaturated carboxylic acid ester such as methyl acrylate, ethyl acrylate, isopropyl acrylate, n-butyl acrylate, isobutyl acrylate, n-hexyl acrylate, iso-octyl acrylate, methyl methacrylate, dimethyl maleate, and diethyl maleate, and carbon monoxide can be mentioned as one chooses. In particular, unsaturated carboxylic acid ester is a suitable copolymer component.

The metal ion is having a valence of monovalence, bivalence, or trivalence, in particular, having a valence of monovalence, bivalence, or trivalence of the groups IA, IIA, IIIA, IVA, and VIII in the element periodic law. More specifically, there can be mentioned Na⁺ K⁺, Li⁺, Cs⁺, Ag⁺, Hg⁺, Cu⁺, Be⁺⁺, Mg⁺⁺, Ca⁺⁺, Sr⁺⁺, Ba⁺⁺, Cu⁺⁺, Cd⁺⁺, Hg⁺⁺, Sn⁺⁺, Pb⁺⁺, Fe⁺⁺, Co⁺⁺, Ni⁺⁺, Zn⁺⁺, Al⁺⁺⁺, Sc⁺⁺⁺, Fe⁺⁺⁺, and Y⁺⁺⁺.

The above materials are excellent in a transparency, a shock resistance, and a mar-proof property. In addition, a thick-walled molding is possible and a dignity sense of a glass can be obtained. Consequently, these materials are suitable for a material of the resin sheathing body (b).

Any resin material can be used for the hollow molding body (a) made of a resin and the cap member 18. There can be used for instance a polyolefin series resin (such as polyethylene and polypropylene), polyester (PET (polyethylene terephthalate)), PETG, PCTG, PCT (polycyclohexane dimethyl terephthalate), PCTA, PEN (such as polyethylene naphthalate), an acrylic resin, a styrene series resin (such as a styrene acrylonitrile copolymer resin and a styrene methyl methacrylate copolymer resin), a cycloolefin polymer, polycarbonate, polyamide, an ionomer resin, and PAN (polyacrylonitrile) . In the case in which a material the same as that of the resin sheathing body (b) is used, a synergistic effect with the resin sheathing body (b) can be obtained, thereby improving a high quality sense, an appearance property, and an aesthetic appreciation of the composite container (A).

The resin hollow molding body (a) is set in a metal mold, and a molten resin is flown into the metal mold and on an external surface of the resin hollow molding body (a) to form the resin sheathing body (b) . Consequently, it is preferable that the hollow molding body (a) is made of polyester or polyamide that has a comparatively high melting temperature in the case in which a highly transparent synthetic resin is used.

In the case in which a liquid material that is held in the resin hollow molding body (a) is a chemical, it is preferable to use polyethylene or polypropylene that has a comparatively excellent chemical resistance in highly transparent synthetic resins.

Moreover, it is possible and preferable to use the resin hollow molding body (a) composed of multiple layers of which one layer is a barrier layer in order to improve a barrier characteristic.

As a material that is used for a barrier layer, there can be mentioned for instance an ethylene vinyl alcohol copolymer (EVOH) and polyamide.

Moreover, it is possible to be provided with an adhesive layer in order to improve an adhesive property of the barrier layer to other layers similarly to an adhesive property to the highly transparent resin sheathing body (b).

Similarly to the above resin hollow molding body (a), for the cap member 18, it is preferable to use polyethylene or an ionomer resin that has a comparatively excellent chemical resistance in highly transparent synthetic resins since the cap member 18 may partially come into contact with the chemical.

Such a highly transparent synthetic resin may be colored or may have no color. Moreover, the resin hollow molding body (a), the highly transparent resin sheathing body (b), and the cap member 18 can have different colors from each other.

In the case in which a blue highly transparent synthetic resin in which Heliogen Blue K6911D (manufactured by BASF Company) is contained in ionomer is used for molding, the material can be colored to be blue.

Even in the case in which a character or a graphic is generated on a surface of the resin hollow molding body (a), the character or the graphic that has been generated on the resin hollow molding body (a) is visible reliably from the outside of the highly transparent resin sheathing body (b) by using such a highly transparent synthetic resin.

Moreover, in the case in which a light reflecting powder (not shown) is dispersed in the highly transparent synthetic resin, a light is reflected from the light reflecting powder and glitters, thereby further improving a high quality sense.

As such a light reflecting powder, it is preferable to use a light reflecting powder in which a metal or metal oxide is coated on a surface of mica that is a core of the light reflecting powder.

Moreover, in the present embodiment, since both of the resin hollow molding body (a) and the highly transparent resin sheathing body (b) are made of a resin, it is not necessary to separate the resin hollow molding body (a) and the highly transparent resin sheathing body (b) from each other in a disposal, whereby a recycle property is extremely satisfactory.

Furthermore, in the case in which the resin hollow molding body (a) that is a core is made of a resin, and the resin sheathing body (b) is made of a highly transparent synthetic resin, a high quality sense, an aesthetic appreciation, and an appearance property can be extremely improved for the composite container (A).

The resin hollow molding body (a) can be previously manufactured by a blow molding method or by a method of forming two divided molding bodies in advance and welding the two bodies using a vibration welding method. However, the manufacturing method is not restricted in particular. Moreover, in the case in which a highly transparent resin sheathing body (b) is integrated with an outside of the resin hollow molding body (a), the resin hollow molding body (a) is set in a pair of metal mold and is over-molded in the state in which the cap member 18 has been mounted. The method for integrating the highly transparent resin sheathing body (b) with an outside of the resin hollow molding body (a) is not restricted in particular.

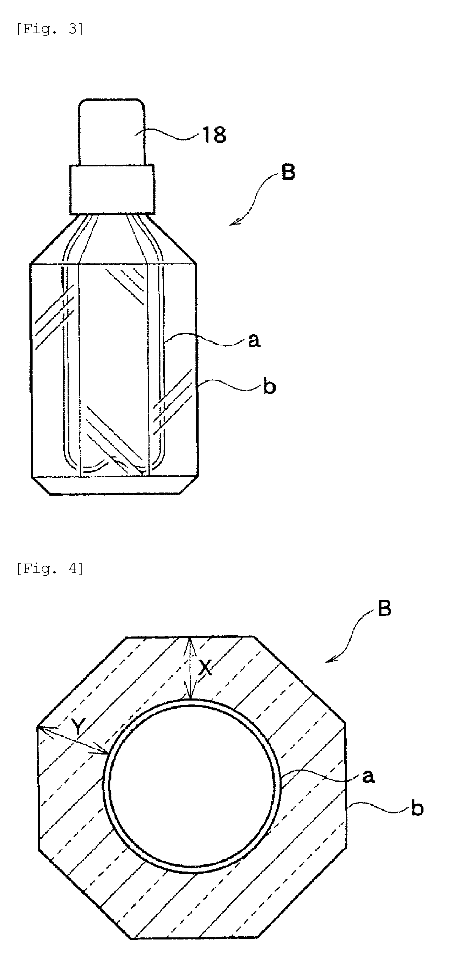

Figs. 3 and 4 show another embodiment of a composite container in accordance with the present invention.

Elements substantially equivalent to those illustrated in Figs. 1 and 2 are numerically numbered similarly and the detailed descriptions of the equivalent elements are omitted.

For the composite container (B) shown in Figs. 3 and 4, the resin hollow molding body (a) that is formed inside is in a cylindrical shape, and a cross section in a horizontal direction for an external shape of the highly transparent resin sheathing body (b) is in an octagon shape. In other words, a cross-sectional shape in a horizontal direction of the resin hollow molding body (a) and that of the highly transparent resin sheathing body (b) are different from each other.

It is preferable that the minimum thickness (X) at the major portion of the highly transparent resin sheathing body (b) is at least 0.1 mm, in particular at least 1 mm, and the maximum thickness (Y) of the highly transparent resin sheathing body (b) is 50 mm or less, in particular 30 mm or less.

Since a shape of the resin hollow molding body (a) and that of the highly transparent resin sheathing body (b) are different from each other as described above, a part of the minimum thickness (X) and a part of the maximum thickness (Y) can be discriminated with clarity, whereby the resin hollow molding body (a) disposed inside can be discriminated with clarity from the outside. Moreover, in the case in which a liquid of a blue color or an opaque white color has been stored into the resin hollow molding body (a), the color appears outside via a transparent body, whereby a shape and a profile of the resin hollow molding body (a) can be discriminated with clarity.

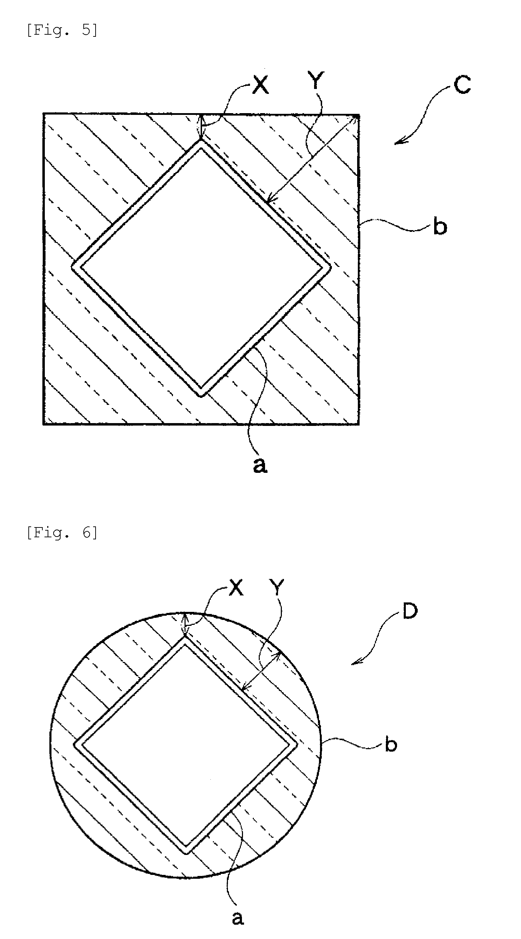

Fig. 5 is a cross-sectional view for a major portion of a composite container (C) in accordance with another embodiment of the present invention.

The composite container (C) in accordance with the present embodiment is composed of a resin hollow molding body (a) in which a cross section in a horizontal direction is in a quadrangular shape and a highly transparent resin sheathing body (b) in which a cross section in a horizontal direction is in a quadrangular shape.

A minimum thickness (X) and a maximum thickness (Y) at a maj or portion are configured by arranging the resin hollow molding body (a) and the highly transparent resin sheathing body (b) at the positions rotated by an angle of 45 degrees.

An example of a composite container (D) in accordance with another embodiment shown in Fig. 6 is a combination of a resin hollow molding body (a) in which a cross section in a horizontal direction is in a quadrangular shape and a highly transparent resin sheathing body (b) in which a cross section in a horizontal direction is in a cylindrical shape.

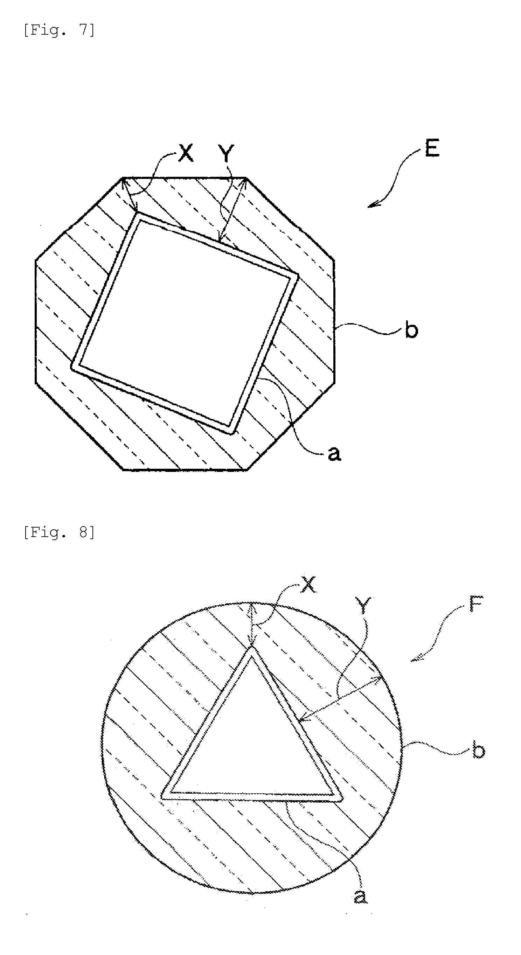

An example of a composite container (E) in accordance with another embodiment shown in Fig. 7 is a combination of a resin hollow molding body (a) in which a cross section in a horizontal direction is in a quadrangular shape and a highly transparent resin sheathing body (b) in which a cross section in a horizontal direction is in an octagon shape. An example of a composite container (F) in accordance with another embodiment shown in Fig. 8 is a combination of a resin hollow molding body (a) in which a cross section in a horizontal direction is in a triangular shape and a highly transparent resin sheathing body (b) in which a cross section in a horizontal direction is in a cylindrical shape.

For any one of the above embodiments, a minimum thickness (X) at a major portion of the highly transparent resin sheathing body (b) is at least 0.1 mm and a difference of a maximum thickness (Y) and the minimum thickness (X) at a major portion of the highly transparent resin sheathing body (b) is at least 2 mm.

While the preferred embodiments of the present invention have been described above, the present invention is not restricted to the embodiments. For instance, any shapes of the resin hollow molding body (a) and the highly transparent resin sheathing body (b) and a combination of any shapes can be adopted depending on an intended purpose of a user and a use application. Moreover, an article that is hold in the composite container is not restricted in particular.

The point is any shapes and any combination of shapes can be adopted and a color of the content is not restricted in particular providing the resin hollow molding body (a) can be discriminated via the highly transparent resin sheathing body (b) . For instance, the highly transparent resin sheathing body (b) in a cylindrical shape can also be combined with the resin hollow molding body (a) in a cylindrical shape. Moreover, the centers of the inside container and the outside container can be shifted from each other, whereby a thickness of one side of the highly transparent resin sheathing body (b) is larger and a thickness of the other side is smaller.

## Claims

1. A composite container comprising a hollow molding body (a) made of a resin having a hollow inside and a highly transparent resin sheathing body (b) that has been integrated with an outside of the hollow molding body (a), wherein as a thickness of the highly transparent resin sheathing body (b) for a cross section in a horizontal direction getting across the hollow molding body (a) and the highly transparent resin sheathing body (b) at the major portion of the composite container, a minimum thickness (X) of the highly transparent resin sheathing body (b) is at least 0.1 mm and a difference of a maximum thickness (Y) and the minimum thickness (X) is at least 2 mm.

2. The composite container as defined in claim 1, wherein a shape of the hollow molding body (a) and that of the highly transparent resin sheathing body (b) are different from each other.

3. The composite container as defined in claim 1 or 2, wherein the highly transparent resin sheathing body (b) is made of a highly transparent synthetic resin having a total ray transmittance (conforming to JIS K7105, and measured with a sheet having a thickness of 1 mm) of at least 80%.

4. The composite container as defined in claim 3 or 4, wherein the highly transparent synthetic resin is an ionomer of an ethylene (meth)acrylate copolymer.
